# EUROPEAN PATENT APPLICATION

(11) **EP 1 931 163 A1**
(43) Date of publication of application: **11.06.2008**
(21) Application number: 06775599.1
(22) Date of filing: 05.09.2006
(51) Int. Cl.: H04Q 7/38

(54) **A METHOD, WIRELESS DEVICE AND WIRELESS COMMUNICATION SYSTEM FOR REALIZING INFORMATION TRANSFER BETWEEN WIRELESS DEVICES**

(30) Priority: 05.09.2005 CN 200510098755
(71) Applicant: Huawei Technologies Co., Ltd., Longgang District, Shenzhen, Guangdong 518129 (CN)
(72) Inventor: WU, Xuyong, Guangdong 518129 (CN)
(74) Representative: Goddar, Heinz J.
(86) International application number: PCT/CN2006/002282
(87) International publication number: WO 2007/028327

(57) **Abstract**

A method, wireless device and wireless communication system includes: first, the wireless device of the transmit party transmits the information of small data volume such as the address information carried by power key-controlled impulse (energy impulse) sequence at predefined periodicity special time interval to the receive party, wherein the address information is the information which waits for being transmitted ; the wireless device of the receive party obtains the information by detecting and identifying the power key-controlled impulse sequence. The present invention transmits some itself information of small data volume to other wireless devices within coverage area by utilizing some special time slot and the information are correctly received. Moreover, the present invention does not increase the cost and complexity of the device. So, the present invention can realize interaction of small volume information between devices using heterogeneous modulation technique, and has the advantages of strong compatibility, simple realization and lower realization cost.

## Description

### Technical Field

The present invention relates to the technical field of wireless communications, in particular, to a method, wireless device and wireless communication system for implementing information transfer between wireless devices.

### Background of the Invention

With the rapid development of Broadband Wireless Access (BWA) technology, a technology for developing the broadband metropolitan area access using wireless resources finds a strong vitality and a broad market.

Wireless spectrum resources are very precious. Especially for some areas not well planned or some license- Exempt frequency bands, a plurality of base stations usually runs on the same channel. As a result, the signals of different base stations may interfere with each other. Therefore, for coordination and coexistence of each base station device under the same frequency band, especially, the coexistence of each base station device under License-Exempt frequency bands, some coexistence mechanisms among base station devices need to be established.

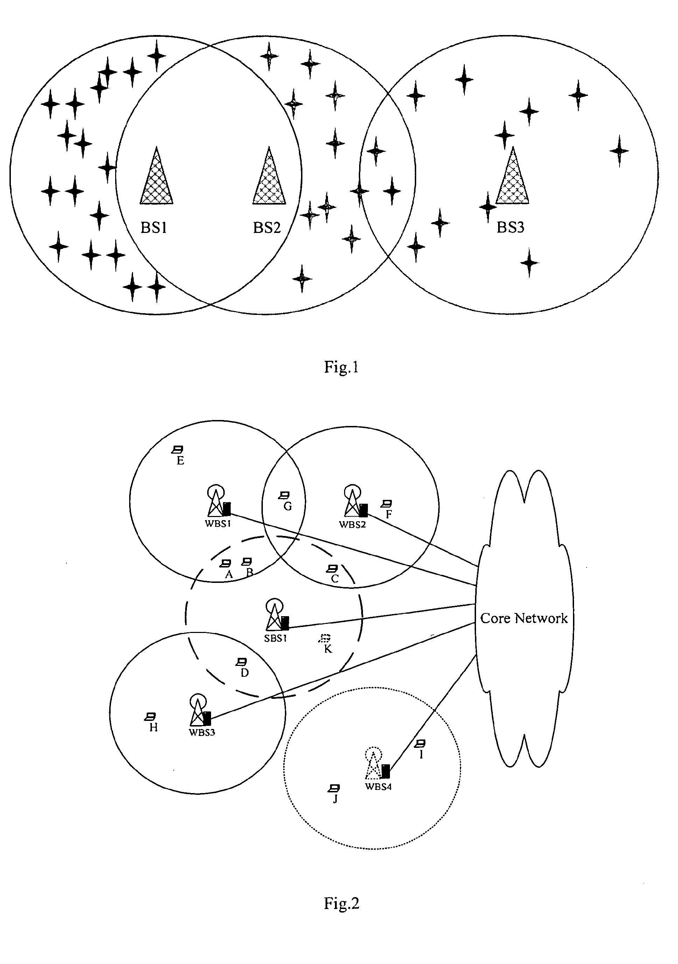

In a coexistence system with the coexistence mechanism, it is usually required that the transceiving synchronization should be guaranteed among different base stations. Therefore, it may be ensured that the transceiving interference among stations near to each other is avoided. For example, for base stations BS 1 and BS2 in Figure 1, if BS2 is receiving signals when BS 1 is sending signals, severe interference will be introduced to the receiving of signals from subordinate terminals of BS2.

The base station has two states: a normal working state and a starting initialization state. The initialization process of a newly started base station near several base stations in the normal working state will now be described below. All coexistence base stations are connected to a core network via a wired path, and may communicate with each other via a wire.

As shown in Figure 2, there is a plurality of base stations near to starting base station SBS1, including WBS1, WBS2, WBS3 and WBS4. WBS1, WBS2, WBS3 are adjacent stations of SBS 1. The adjacent station refers to base stations with a common coverage area having effective terminals. As shown in Figure 2, terminals A and B exist in the common coverage area of WBS1 and SBS1, terminal C exists in the common coverage area of WBS2 and SBS1, and terminal D exists in the common coverage area of WBS3 and SBS1. Therefore, it may be determined that WBS1, WBS2, WBS3 are adjacent stations of SBS1.

To ensure that the negotiation may be performed among adjacent stations so as to implement a coexistence mechanism, for a newly established base station, the message interaction needs to be established between adjacent stations when the newly established base station starts. However, the newly established base station cannot contact with the adjacent base stations via an air interface directly. Therefore, the adjacent stations may only perform the message interaction via the wired network, so that the base station needs to know the contact information of the adjacent stations, such as an IP address.

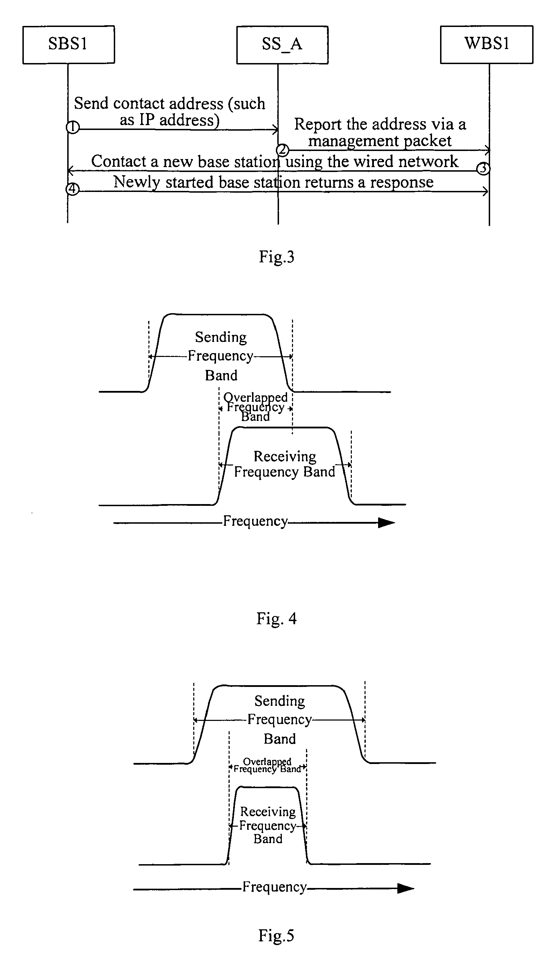

To ensure that the base station may obtain the contact information of the adjacent stations, a process shown in Figure 3 is provided in the prior art. The newly started base station needs to broadcast the IP address or other equivalent contact address to all the terminals in the coverage area. For example, SBS1 first sends the IP address to terminal SS_A, and terminal SS_A forwards the obtained address information to the base station to which terminal SS_A pertains originally, such as WBS1, and subsequently, the working base station to which terminal SS_A originally pertains finds the newly started base station via a wired network and performs the corresponding message interaction.

To implement the mechanism shown in Figure 3, a signal sent by the starting base station and carrying the contact address (IP address) should be received and decoded correctly by the terminal. At present, there is a plurality of modulation-demodulation physical layers in this field, including Single Carrier (SCa), Orthogonal Frequency Division Multiplexing (OFDM) and Orthogonal Frequency Division Multiple Access (OFDMA) and so on.

It can be seen that a terminal employing a technology different from the physical layer technology for the newly added base station can not correctly receive the physical layer information sent from the newly added base station. Therefore, the IP address of the new base station may not be reported correctly, and the connectivity over wired network can not be established between the new and old base stations. Moreover, even if the newly added base station employs the same physical layer technology as that of the terminal, a correct demodulation may only be implemented when the sending and the receiving parties are synchronized strictly. In order to synchronize correctly, a lot of overhead needs to be added, such as the preamble. Additionally, the frequency bandwidth and the frequency point of the sending and the receiving parties also need to be aligned; otherwise, the information interaction can not be accomplished.

Therefore, in the prior art, it is impossible to ensure that a newly added adjacent base station can easily interact with an existing base station in the process shown in Figure 3.

### Summary of the Invention

An object of the present invention is to provide a method, a wireless device and a wireless communication system for implementing an information transfer between wireless devices. Therefore, a reliable transfer for information with small amount of data may be implemented between a wireless device employing the heterogeneous physical layer technology, a wireless device without the symbol-level synchronization or a device whose frequency bands are not aligned but have an overlapped part.

The object of the present invention is accomplished through the following technical solutions.

A method for implementing an information transfer between wireless devices, includes:

sending, by a wireless device of a sending party, information to be sent, to a receiving party in an energy keying pulse sequence in a specific periodic time interval; and

obtaining, by a wireless device of the receiving party, the information sent from the wireless device of the sending party by monitoring and identifying the energy keying pulse sequence in the specific periodic time interval.

The specific periodic time interval includes:

a time interval before transmit-receive transition gap of a Time Division Duplexing, TDD, frame structure; or, a time interval before a starting position of a Frequency Division Duplexing, FDD, frame.

The information to be sent includes, but not limited to:

at least one of address information and sector number information of the wireless device.

Sending the information to be sent to the receiving party includes:

determining a structure and a sending time of an energy keying pulse frame; and

performing an energy keying pulse mode mapping on the information to be sent according to the structure of the energy keying pulse frame, and sending the energy keying pulse frame at a determined sending timing slot.

The energy keying pulse frame includes at least one of:

a Start Of Frame, information payload, an End Of Frame, checking information, a message frame type and a message frame length.

The structure of the energy keying pulse frame includes:

a combination of symbols 0 and 1 employed by a Start Of Frame and an End of Frame, different from the data information payload;

or

a symbol, employed by the Start Of Frame and the End of Frame, different from the data information payload.

The energy symbol includes: a combination of different energy levels on timing interval.

Obtaining the information sent from the wireless device of the sending party includes:

monitoring, by the wireless device of the receiving party, a signal strength at an air interface, and resolving information sent from the wireless device of the sending party according to signal strength received in different time interval and a threshold of the received signal strength with respect to a determination time.

The predetermined threshold of the received signal strength with respect to the determination time is determined according to a mode of an energy pulse symbol sent by the sending party, and each threshold is determined according to a strength range of signals received in a specific time interval.

Obtaining the information sent from the wireless device of the sending party includes:

within combinations of periodic time intervals, determining to receive complete information according to the Start of Frame and the End of Frame of an energy keying pulse frame, and resolving a information value sent by the sending party from the complete information.

Obtaining the information sent from the wireless device of the sending party further includes:

checking the information resolved from the complete information; if the information is correct, obtaining the information value sent by the sending party from the payload information contained in the information.

A device between the wireless device of the sending party and the wireless device of the receiving party includes at least one of:

a device employing a heterogeneous physical layer technology, a device without a symbol-level synchronization, and a device whose frequency bands are not aligned but have an overlapped part.

The present invention further provides a wireless device, including a wireless device information sending apparatus, and the wireless device information sending apparatus includes a transmission frame structure and timing processing unit, an energy keying pulse mode mapping unit and an energy control sending unit, and:

the transmission frame structure and timing processing unit is adapted to perform an energy keying pulse frame structure adaptation on information to be sent, and determine the time when to send the information;

the energy keying pulse mode mapping unit is adapted to map the information to be sent into an energy keying pulse symbol sequence according to a predetermined energy keying pulse mode; and

the energy control sending unit is adapted to send the energy keying pulse symbol sequence carrying the information to be sent with an energy corresponding to the energy keying pulse mode at a determined time.

The present invention further provides a wireless device, including a wireless device information receiving apparatus, and the wireless device information receiving apparatus includes an energy detection receiving unit, an energy keying mode determining unit and a receiving frame structure and timing processing unit, and:

the energy detection receiving unit is adapted to monitor a received signal strength at an air interface, and determine quantized indication information of the received signal strength;

the energy keying pulse mode determining unit is adapted to judge the indication information of the received signal strength according to a predetermined threshold of the received signal strength and optionally according to a determination time corresponding to the strength threshold, and obtain symbol information sent by the sending party; and

the transmission frame structure and timing processing unit is adapted to collect complete frame information according to a predetermined timing position of a time interval, a Start Of Frame and an End Of Frame, and extract information data carried in the frame from the sending party.

The present invention further provides a wireless communication system, including a wireless device of a sending party and a wireless device of a receiving party, and a wireless device information sending apparatus is configured in the wireless device of the sending party, and a wireless device information receiving apparatus is configured in the wireless device of the receiving party; the wireless device of the sending party sends information to be sent in an energy keying pulse sequence within a specific periodic time interval via the wireless device information sending apparatus; and the wireless device of the receiving party obtains the information by monitoring and identifying the energy keying pulse sequence within the specific periodic time interval via the wireless device information receiving apparatus.

According to the present invention, some time periods may be used to send some information with small amount of data to other wireless devices in the coverage area via energy keying pulses and the information may be received correctly. Moreover, the present invention may not add the cost and complexity of the device. Therefore, according to the present invention, intercommunication of small amount information between devices using heterogeneous modulation technology may be implemented, and advantages, such as a high compatibility, a simple implementation and a low implementation cost, may be provided.

Additionally, according to the present invention, a periodic time interval for sending an energy keying pulse frame is defined from a position of the transmit-receive transition gap of a TDD frame structure or from a time position before the Start of Frame of an FDD frame. As a result, it may be avoided that the preamble must be added because the original physical burst is interrupted due to adding the time period, so that no unnecessary overhead needs to be added for the time period.

### Brief Description of the Drawings

Figure 1 is a schematic diagram showing a networking of a wireless network;

Figure 2 is a schematic diagram showing a correlation between adjacent base stations;

Figure 3 is a schematic diagram showing an initialization interaction process of an SBS;

Figure 4 is a schematic diagram showing that the frequency bands between transceiving devices are not aligned but have an overlapped part;

Figure 5 is another schematic diagram showing that the frequency bands between transceiving devices are not aligned but have an overlapped part;

Figure 6 is another schematic diagram showing that the frequency bands between transceiving devices are not aligned but have an overlapped part;

Figure 7 is another schematic diagram showing that the frequency bands between transceiving devices are not aligned but have an overlapped part;

Figure 8 is a schematic diagram showing the specific structure of the system according to the present invention;

Figure 9a is a schematic diagram showing the structure of the sending apparatus according to the present invention;

Figure 9b is another schematic diagram showing the structure of the receiving apparatus according to the present invention;

Figure 10 is a schematic diagram showing the structure of the information frame sent based on Time Division Duplexing (TDD);

Figure 11 is a schematic diagram showing the structure of the frame carrying coexistence information;

Figure 12 is a schematic diagram showing the structure of the information frame sent based on Frequency Division Duplexing (FDD);

Figure 13 is a schematic diagram of an energy symbol;

Figure 14 is another schematic diagram of an energy symbol;

Figure 15 is a schematic diagram showing the mode determination of Figure 13; and

Figure 16 is a schematic diagram showing the mode determination of Figure 14.

### Detailed Description of the Embodiments

According to the present invention, sending and receiving information with a small amount of data, such as broadcasting an IP address of a newly started base station, may be implemented during the process of finding adjacent stations when a coexistence base station starts, without changing the original physical layer technologies of the base station and the terminal.

The present invention mainly satisfies requirements for reliably transferring information with small amount of data between devices employing heterogeneous physical layer technologies, or between devices without the symbol-level synchronization, or between devices whose frequency bands are not aligned but have an overlapped part. The heterogeneous physical layer technology includes Single Carrier (SCa), Orthogonal Frequency Division Multiplexing (OFDM) and so on. For example, if one device employs the SCa technology and the other device employs the OFDM technology, the devices are referred to as the devices employing the heterogeneous physical layer technologies. The device without the symbol-level synchronization may be a device not performing the synchronization process of the preamble/the training code. The case in which the frequency bands are not aligned but have an overlapped part is shown in Figure 4 to Figure 7, and several possible devices whose frequency bands are not aligned but have an overlapped part are given.

The core concept of the present invention lies in that information with small amount of data to be sent is carried via an energy keying pulse timing slot in a determined time interval (i.e. a specific periodic time interval) and sent to a destination device which is ready to receive the information.The corresponding wireless device may receive the information with small amount of data from the wireless device of the sending party, and the information with small amount of data may include the IP address information and the sector number information of the newly added base station and so on.

The method and system of the present invention are now illustrated in detail in conjunction with the drawings.

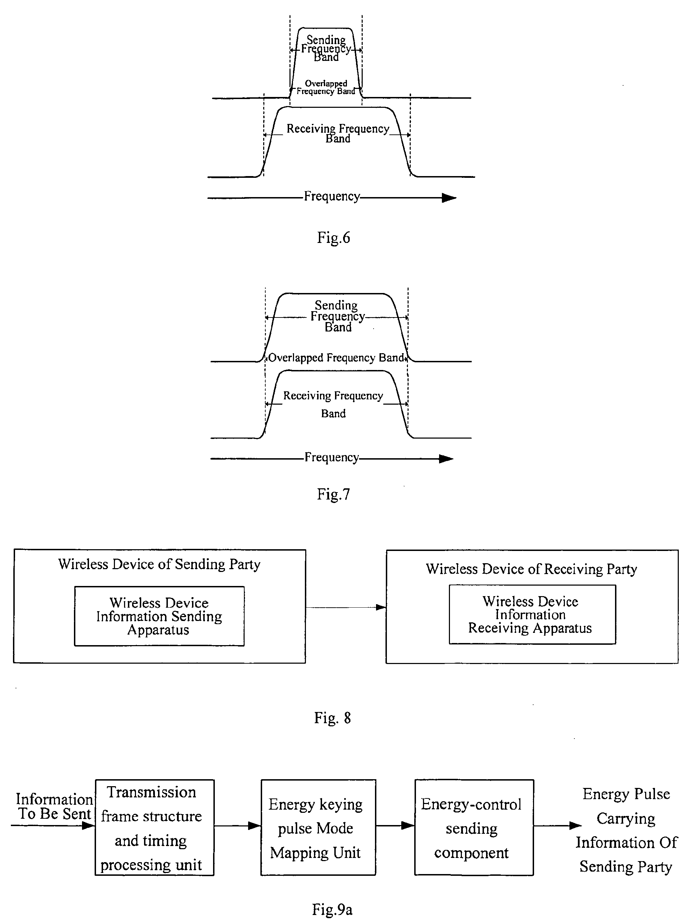

First of all, the system of the present invention is illustrated in conjunction with the drawings. As shown in Figure 8, the system includes a wireless device of the sending party and a wireless device of the receiving party, and a wireless device information sending apparatus is configured in the wireless device of the sending party, and a wireless device information receiving apparatus is configured in the wireless device of the receiving party; the wireless device of the sending party sends the information to be sent in an energy keying pulse sequence within a specific periodic time interval via the wireless device information sending apparatus; and the wireless device of the receiving party obtains the information by monitoring and identifying the energy keying pulse sequence within the specific periodic time interval via the wireless device information receiving apparatus.

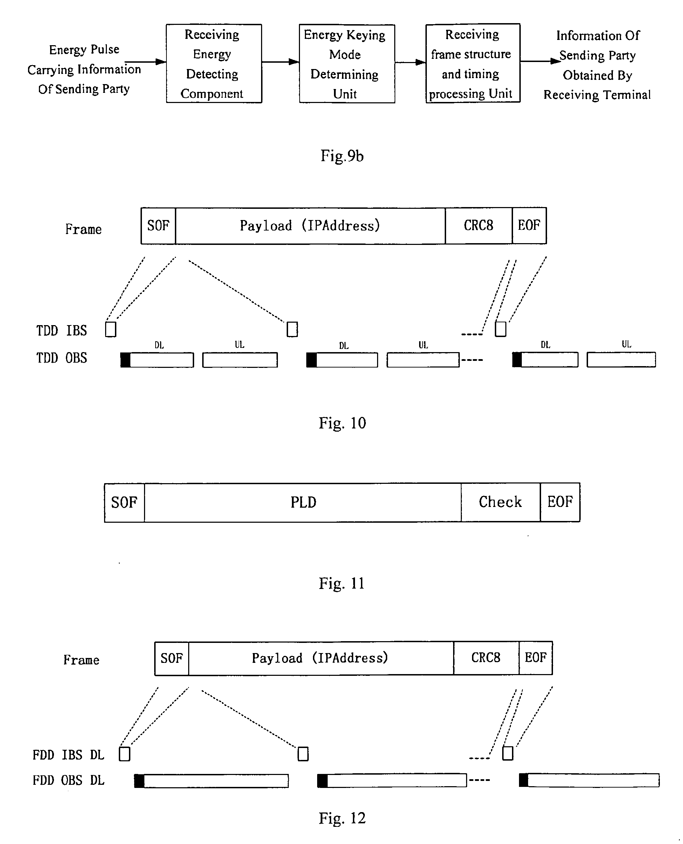

Then, the structures of the wireless device information sending apparatus and the wireless device information receiving apparatus will be described in conjunction with Figure 9a and Figure 9b.

As described above and shown in Figure 9a, the wireless device information sending apparatus is configured in the wireless device of the sending party, and may include a transmission frame structure and timing processing unit, an energy keying pulse mode mapping unit and an energy-control sending unit.

The transmission frame structure and timing processing unit is adapted to perform an energy keying pulse frame structure adaptation on the information to be sent (such as the IP address information and the sector number information of a base station device), i.e. determine an energy keying pulse frame structure which is agreed on by the sending and the receiving parties and required for sending the information, and determine a time when to send the information and outputting a timing control signal to other processing units of the sending party, specifically, determining the time interval for sending the energy keying pulse sequence.

The energy keying pulse mode mapping unit is adapted to map information element to be sent into an energy keying pulse symbol sequence according to the energy keying pulse symbol mapping mode agreed on by the sending and the receiving parties during each symbol cycle, i.e. carry the information to be sent in the energy keying pulse symbol sequence for sending the information.

The energy control sending unit is adapted to send the energy keying pulse frame carrying the information to be sent according to the corresponding symbol energy keying mode in a determined time, i.e. in the corresponding time interval.

As shown in Figure 9b, the wireless device information receiving apparatus is configured in the wireless device of the receiving party. Specifically, the wireless device information receiving apparatus may include a receiving energy monitoring unit, an energy keying pulse mode determining unit, a receiving frame structure and timing processing unit.

The receiving energy monitoring unit is used for monitoring the strength of a received signal at the air interface in real time and providing quantized indication information of the received signal strength, i.e. providing the specific value of the quantized strength of the received signal in real time.

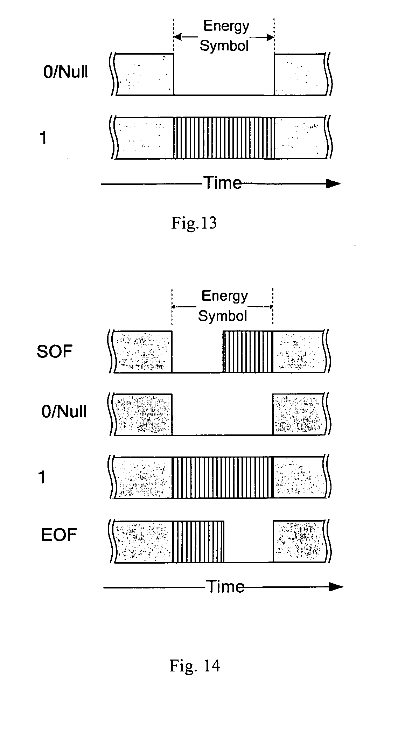

The energy keying pulse mode determining unit is used for determining the indication value of the strength of the received signal within each symbol cycle according to a predetermined threshold of the received signal strength with respect to time and obtaining the symbol information sent by the sending party; or, used for determining the indication value of the strength of the received signal only according to the threshold of the received signal strength, and obtaining the symbol information sent by the sending party. For example, as shown in Figure 13, if the energy keying pulse symbol mode defines two kinds of set, i.e. binary symbol 0 and 1, the receiver uses a determination threshold for received signal strength verdict. When the received signal strength exceeds the determination threshold, it is determined that the received symbol is 1; otherwise, it is determined that the received symbol is 0.

The transmission frame structure and timing processing unit is used for outputting a timing control signal of the receiving party according to the predetermined periodic time interval, and collecting a complete information according to the agreed Start Of Frame bit and End Of Frame, i.e. obtaining a complete packet sent by the sending party and extracting the information values sent by the sending party, such as the IP address and the sector number, from the packet.

The method of the present invention is now illustrated in conjunction with the drawings.

First of all, the following processing needs to be performed on the wireless device of the sending party.

1. Transmission frame structure and timing processing

The wireless device of the sending party performs the frame structure adaptation on the information to be sent (such as the IP address information), in other words, performs the processing for adding Start Of Frame and End Of Frame, checking information and adding verification information. Moreover, the information to be sent is processed according to timing requirements. The information to be sent includes, but is not limited to, the IP address and the sector number information of the wireless device and so on.

Figure 10 shows an example of the frame structure and timing in TDD.

In Figure 10, the physical frame structure of a normal working state includes two parts, i.e. Downlink (DL) and Uplink (UL). There is an idle time interval between the two parts, and the idle time acts as a transmit-receive transition gap of the device.

In the present invention, a newly started base station may use a time interval defined periodically before the time position, to send an energy keying pulse carrying the information to be sent. However, the periodicity rule of the time interval needs to be known to both of the wireless devices of the sending and the receiving parties, for example, via protocol specifications.

A frame structure may be formed by collecting the time intervals, and is similar to the time slot conception for a narrowband switch. However, the above frame structure, i.e. the structure of the energy keying pulse frame, is relatively short, and an apparent frame delimitation and an error detection capability are required. For example, X.25 frame structure or even a simpler frame structure may be employed.

In Figure 11, the structure of the energy keying pulse sequence includes Start Of Frame (SOF), Payload, Cyclic Redundancy Check (CRC) and End Of Frame (EOF). Figure 11 only shows a simple example, and the practical application of the present invention is not limited thereto.

For example, for carrying the 32-bit address of IPv4, a structure of SOF + 32-bit IP address + 8-bit CRC code + EOF may be used. Information contained in the packet is carried in segments in several predetermined timing slots; in other words, an object frame structure is generated by performing a structure processing on the information to be carried for sending, and the information is carried in the object time interval via the transmission timing processing.

When the FDD mode is employed, the transmission frame structure and timing processing, as shown in Figure 12, is similar to the transmission frame structure and timing processing in the TDD, except that the FDD device does not have a transmit-receive transition gap. Instead, a specific time period before the preamble is defined as the time interval. Because the starting of the downlink physical frame takes the preamble as a flag, the specific time before the preamble may be defined periodically as the time interval, as shown in Figure 12.

2. Processing for mapping energy keying pulse mode

To make the sending and the receiving parties have a common symbol definition to transfer the information correctly, a set of symbol mapping modes need to be defined.

The present invention will be illustrated by the following definition modes.

Mode 1: The whole frame includes symbols 0 and 1. A set of relatively complex frame delimitation mechanism is needed. Specifically, similar to X.25, the SOF and EOF, such as 01111110, may be defined and sent, processing adding five ones and a zero after a zero and a one, before the payload part is sent, and performing processing deleting the one and zero after a leading zero and five consecutive ones when the payload part is received. In the mode, only two kinds of symbols, 0 and 1, need to be defined. Therefore, only two sending energy values may be defined, such as High (H)/ Low (L), corresponding to 0 and 1 respectively. For example, 1 represents the high energy symbol and 0 represents the low energy symbol i.e. (H-1, L-0). Or, several different energy levels may be defined. For example, four energy values corresponding to codes 00/01/10/11 respectively may be defined, such as 0-00, 1-01, 2-10 and 3-11. More information may be carried in a unit time. For example, when two energy levels are defined, the energy keying pulse mode for sending is shown in Figure 13.

Mode 2: If special symbols are defined for the frame delimitation symbol, the time occupation of the whole frame may be shortened and no additional frame processing needs to be added. For example, if IP address 129.0.127.200 (1000, 0001 0000, 0000 0111, 1111 1100, 1000) needs to be send, then 0111, 1110 + 1000, 0001 0000, 0000 0111, 11(0)11 1100, 1000 + CRC8 + 0111, 1110 need to be sent for sending this frame when the frame delimitation mode of X.25 is used. If specific frame delimitation flags are used, the frame may be defined by a single symbol, and the time used may be saved. The frame may become <SOF> + 1000, 0001 0000, 0000 0111, 1111 1100, 1000 + CRC8 + <EOF>.

The frame delimitation flag of the single symbol is now defined in the following example. Specifically, as shown in Figure 14, the time width of an energy keying pulse symbol is divided into a front part and a back part. A symbol, whose front part and back part are of low/high energy values respectively, is defined as <SOF>. A symbol, whose front part and back part are of high/ low energy values respectively, is defined as <EOF>. A symbol, whose front part and back part are both of high energy values, is defined as a binary 1. A symbol, whose front part and back part are both of low energy values, is defined as a binary 0. If the low energy value represents not sending, the binary 0 equals to Null.

Mode 3: A more complex mode is defined, such as a plurality of signal strength levels, mapping multi-bit binary numerical values and more symbol time partition. For example, the time width of the energy keying pulse symbol may be divided in to a plurality of parts, and more information contents are defined for mapping the information to be sent.

3. Processing for Sending Energy Control

Specifically, sending energy in the specific time period is controlled. In other words, when a specific energy symbol carrying the information is to be sent, the energy value for sending the information to the air interface is configured dynamically and in real time according to the time interval information and the combination of the high and low values of the sending energy determined in above processing 1, so that the signal may be sent in a determined energy keying mode, and the energy keying pulse carrying the information may be sent from the sending party.

The sending energies of the high level, the low level and different levels in the keying energy value should be obviously different. It is suggested that the difference between energy values in a mode set is greater than 5 DBs. For example, there are only two energy keying values. For the purpose of determining the energy of the signal received at the receiving party, it is suggested that the high energy part is sent at the maximum sending energy of the sending device (usually greater than 20 dbm), while the low energy part is sent at 0 energy or low energy (0 dbm or bellow). When a base station broadcasts to subordinate terminals of an adjacent station, the base station sends the information to the terminals which need to receive the information and are interfered. Therefore, it is convenient for the terminals to extract and determine the information.

After the sending party sends the information with small amount of data, on the receiving party, the wireless device needs to monitor the received signal strength at the air interface, and resolve the information value sent by the wireless device of the sending party according to the strength of signals received in different timing slots and the threshold of the received signal strength with respect to the determination time. The predetermined threshold of the received signal strength with respect to the determination time is determined according to the strength range of signals received by the receiving party in a specific time interval. In other words, the following processing also needs to be performed on the wireless device of the receiving party, so that corresponding information may be received.

4. Processing for monitoring the received energy

The received signal strength (RSS) at the air interface is monitored in real time, and a quantized Received Signal Strength Indication (RSSI) is provided.

5. Processing for determining energy keying pulse (Energy Pulse) Mode

During this processing, different modes need to be employed for different definition modes of the sending process. A detailed description is as follows.

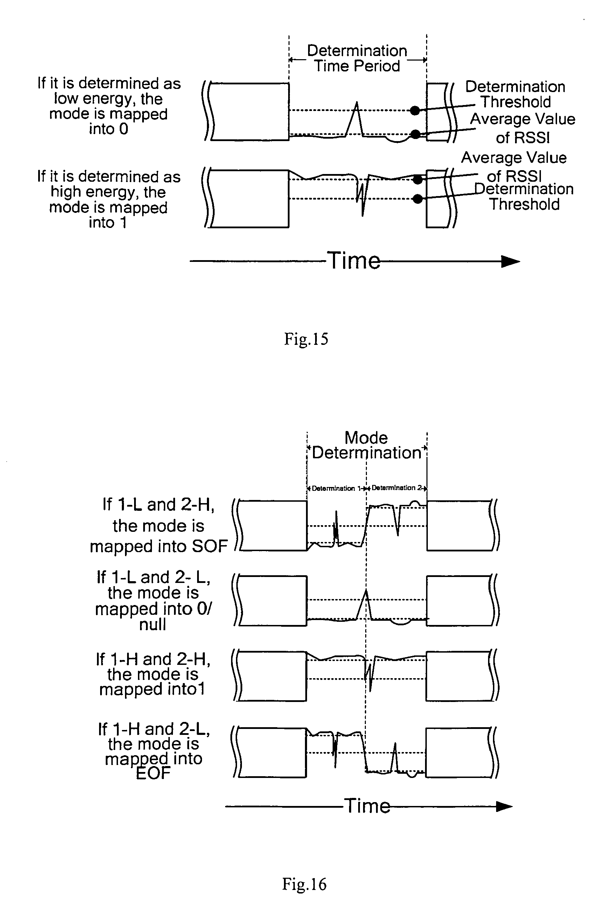

(1) If one time period (i.e. the energy keying pulse frame consists of symbols 0 and 1) is defined in the symbol, the signal strength only needs to be determined in the time period of the symbol cycle according to the configured threshold of the received signal strength. For example, when there are only two kinds of energy information, it is assumed that 0 energy is set by the sending party at low sending energy. Specifically, the RSSI characteristic value, at which the energy keying pulse carrying the information is not received at a normal time, is recorded in a specific time period (i.e. the time width of an energy keying pulse symbol) as the characteristic value of the low sending energy. When the RSSI changes greatly in a time period, a new RSSI characteristic value will be recorded as the characteristic value of the high energy, and the determination threshold will be computed. Subsequently, in each corresponding symbol time, the RSSIs monitored within the symbol time length are averaged, the average value is determined with respect to the threshold, and the determination result is mapped into the binary code. For example, high energy symbol corresponds to 1, and low energy symbol corresponds to 0, as shown in Figure 15.

(2) If a symbol is defined for the frame delimitation, and the time period of the symbol is divided into a front part and a back part, the energy levels (i.e. signal strength) of the two parts of the time period will be first determined in a corresponding time period according to the configured threshold of the received signal strength, then the two determination results are synthesized for a mode determination. The specific determining method is shown in the above description. As shown in Figure 16, according to the determination result, it may be determined that L/H corresponds to SOF, L/L corresponds to 0/null, H/H corresponds to 1 and H/L is defined as EOF.

(3) According to a combination of various signal strengths, multi-bit binary codes and multi-time period symbols, a receiving and determining function of a relatively complex mode may be simply evolved from a mode similar to the above modes 1 and 2.

6. Processing for frame structure and timing

Specifically, the frame data is collected and cached according to the determination result of the receiving mode, the timing control of the specified periodic time interval and frame structure. First of all, a complete packet is collected according to frame delimitations SOF and EOF, and a correctness check is performed on the content of the packet via redundant check information. If the content is correct, the effective information part in the load (i.e. payload) is extracted. Therefore, the actual information sent by the sending party, such as the IP address and the sector number of the sending party, may be obtained.

The information of the sending party may be effectively sent to the receiving party in an energy keying pulse symbol sequence via the above processings 1 to 6, so that the transfer of information with small amount of data between wireless devices is implemented.

All the wireless receiving devices in the present field have the RSSI monitoring function no matter what modulation-demodulation technology is employed. Therefore, in the present invention, a device, no matter what modulation technology is employed, may send information with small amount of data to other devices in the coverage area via an energy keying pulse symbol by using time periods (i.e. time intervals), and the information may be received correctly. According to the present invention, the implementation of the solution is simplified without increasing the cost and complexity.

In conclusion, according to the present invention, intercommunication of information with small amount of data may be implemented between devices using heterogeneous modulation technology. Moreover, the device according to the present invention has the advantages, such as a high compatibility, a simple implementation and a low cost.

According to the present invention, when a time before the transmit-receive transition gap of a TDD frame structure or a time before the starting position of an FDD frame is used as the time interval, it may be avoided that the original physical burst is interrupted for adding the time period. If the physical burst is interrupted, the corresponding preamble should be added, and unnecessary overhead is added. Therefore, according to the present invention, unnecessary overhead may be avoided.

Additional advantages and modifications will readily occur to those skilled in the art. Therefore, the present invention in its broader aspects is not limited to the specific details and representative embodiments shown and described herein. Accordingly, various modifications and variations may be made without departing from the spirit or scope of the present invention as defined by the appended claims and their equivalents.

## Claims

1. A method for implementing information transfer between wireless devices, comprising:
sending, by a wireless device of a sending party, information to be sent, to a receiving party in an energy keying pulse sequence in a specific periodic time interval; and
obtaining, by a wireless device of the receiving party, the information sent from the wireless device of the sending party by monitoring and identifying the energy keying pulse sequence in the specific periodic time interval.

2. The method according to claim 1, wherein the specific periodic time interval comprises:
a time interval before a transmit-receive transition gap of a Time Division Duplexing, TDD, frame structure; or
a time interval before a starting position of a Frequency Division Duplexing, FDD, frame.

3. The method according to claim 1, wherein the information to be sent comprises:
at least one of address information and sector number information of the wireless device.

4. The method according to claim 1, wherein sending the information to be sent to the receiving party comprises:
determining a structure and a sending time of an energy keying pulse frame; and
performing an energy keying pulse mode mapping on the information to be sent according to the structure of the energy keying pulse frame, and sending the energy keying pulse frame at a determined transmission time interval.

5. The method according to claim 4, wherein the energy keying pulse frame comprises at least one of:
a Start Of Frame , information payload, an End Of Frame, checking information, a frame type and a frame length.

6. The method according to claim 4, wherein the structure of the energy keying pulse frame comprises:
a combination of symbols 0 and 1 employed by a Start Of Frame and an End of Frame, different from the data information payload;
or
an energy symbol, employed by the Start Of Frame and the End of Frame, different from the data information payload.

7. The method according to claim 6, wherein the energy symbol comprises: a combination of different energy levels on timing interval.

8. The method according to any of claims 1 to 7, wherein obtaining the information sent from the wireless device of the sending party comprises:
monitoring, by the wireless device of the receiving party, a signal strength at an air interface, and resolving information sent from the wireless device of the sending party according to signal strength received in different time interval and a predetermined threshold of the received signal strength with respect to a determination time interval.

9. The method according to claim 8, wherein, determining the predetermined threshold of the received signal strength with respect to the time interval according to a mode of an energy keying pulse symbol sent by the sending party, and determining each threshold according to a strength range of signals received in the specific time interval.

10. The method according to claim 8, wherein obtaining the information sent from the wireless device of the sending party comprises:
determining to receive complete frame according to the Start Of frame and the End of frame of the energy keying pulse frame, within combinations of periodic time interval and
obtaining value sent by the sending party from the complete frame

11. The method according to claim 10, wherein obtaining the information sent from the wireless device of the sending party further comprises:
checking the information resolved from the complete information; if a checking result of the information is correct, obtaining the information from the payload sent by the sending party .

12. The method according to claim 7, wherein a device between the wireless device of the sending party and the wireless device of the receiving party comprises at least one of:
a device employing a heterogeneous physical layer technology, a device without a symbol-level synchronization, and a device whose frequency bands are not aligned but have an overlapped part.

13. A wireless device, comprising a wireless device information sending apparatus, wherein the wireless device information sending apparatus comprises a transmission frame structure and timing processing unit, an energy keying pulse mode mapping unit and an energy control sending unit, wherein:
the transmission frame structure and timing processing unit is adapted to perform an energy keying pulse frame structure adaptation on information to be sent, and determine a time when to send the information;
the energy keying pulse mode mapping unit is adapted to map the information to be sent into an energy keying pulse symbol sequence according to a predetermined energy keying pulse mode; and
the energy control sending unit is adapted to send the energy keying pulse symbol sequence carrying the information to be sent with an energy corresponding to the energy keying pulse mode at a determined time.

14. A wireless device, comprising a wireless device information receiving apparatus, wherein the wireless device information receiving apparatus comprises an energy detection receiving unit, an energy keying mode determining unit and a transmission frame structure and timing processing unit, wherein:
the energy detection receiving unit is adapted to monitor a received signal strength at an air interface, and determine quantized indication information of the received signal strength;
the energy keying pulse mode determining unit is adapted to judge the indication information of the received signal strength according to a predetermined threshold of the received signal strength and optionally according to a determination time corresponding to the strength threshold, and obtain symbol information sent by the sending party; and
the receiving frame structure and timing processing unit is adapted to collect complete frame information according to a predetermined timing of a time interval, a Start Of Frame and an End Of Frame, and extract information data carried in the frame from the sending party.

15. A wireless communication system, comprising a wireless device of a sending party and a wireless device of a receiving party, wherein a wireless device information sending apparatus is configured in the wireless device of the sending party, and a wireless device information receiving apparatus is configured in the wireless device of the receiving party; the wireless device of the sending party sends information to be sent in an energy keying pulse sequence in a specific periodic time interval via the wireless device information sending apparatus; and the wireless device of the receiving party obtains the information by monitoring and identifying the energy keying pulse sequence in the specific periodic time interval via the wireless device information receiving apparatus.
